# EUROPEAN PATENT SPECIFICATION

(11) **EP 3 476 458 B1**
(45) Date of publication and mention of the grant of the patent: **09.06.2021**
(21) Application number: 18202955.3
(22) Date of filing: 26.10.2018
(51) Int. Cl.: B01D 39/20, C02F 1/28, C01B 32/372

(54) **FILTER AND METHOD OF PREPARING THE SAME**
FILTER UND VERFAHREN ZUR HERSTELLUNG DAVON
FILTRE ET SON PROCÉDÉ DE PRÉPARATION

(30) Priority: 30.10.2017 TW 106137381; 30.05.2018 TW 107118417
(43) Date of publication of application: 01.05.2019
(73) Proprietor: AUO Crystal Corporation, Taichung City 421 (TW)
(72) Inventor: LEE, Tung-Feng, Taichung City 421 (TW); HSU, Meng-Kwei, Taichung City 406 (TW)
(74) Representative: Delorme, Nicolas

(56) References cited:
- WO-A1-2008/129551
- WO-A2-2005/070182
- CN-A- 102 295 317
- CN-A- 102 350 323
- CN-A- 102 649 592

## Description

The disclosure relates to a filter and a method of preparing the same, and more particularly to a filter including a nano silicon material and a method of preparing the same.

Hydrogen water is a type of pure water containing hydrogen gas. Hydrogen water can help in removing free radicals (such as reactive oxygen species) present in the body, thus becoming a popular health drink.

Currently, most of commercially available hydrogen water is produced by directly dissolving high-purity hydrogen in pure water, or reacting magnesium powder or a magnesium tablet with pure water to generate hydrogen gas. However, the former method has problems such as difficulty in obtaining high-purity hydrogen, difficulty in dissolving high-purity hydrogen in pure water, and safety concerns regarding usage of high-purity hydrogen. With regard to the latter method, magnesium hydroxide that is produced by reacting magnesium with pure water may not be simultaneously taken with certain drugs used for treating cardiovascular diseases due to contraindication. Moreover, if the content of the magnesium hydroxide is too high, it is likely to lead to acute drug poisoning, acute renal failure, hypermagnesemia or other adverse health conditions.

Document CN 102 649 592 A discloses a method for preparing a filter from starting materials including nano silicon oxide powder.

Therefore, an object of the disclosure is to provide a filter and a method of preparing the same, both of which can alleviate at least one of the drawbacks of the prior art.

According to one aspect of the disclosure, the method of preparing a filter includes the steps of:
(i) providing a precursor that includes an active composition and a binder, the active composition including a filtering material and a nano silicon material, and
(ii) heating and pressing the precursor to obtain the filter in which the filtering material is bound with the nano silicon material through the binder.

According to another aspect of the disclosure, the filter includes an active composition and a binder. The active composition includes a nano silicon material and a filtering material that is bound with the silicon material through the binder.

Other features and advantages of the disclosure will become apparent in the following detailed description of the embodiment(s) with reference to the accompanying drawings, of which:
FIG. 1A is a schematic view showing the structure of silicon-carbon (SiC) composite as prepared in Preparative Examples 1 to 5;
FIG. 1B is an electron micrograph showing the Si-C composite as prepared in Preparative Example 1;
FIG. 2 is a schematic view showing a filter as obtained in Example 1;
FIG. 3 is a schematic view showing a filter as obtained in Example 3;
FIG. 4 is a schematic view showing a filter as obtained in Example 5;
FIG. 5 is a perspective view showing the filter as obtained in Examples 6 and 7;
FIG. 6 is a perspective view showing a filter as obtained in Example 8;
FIG. 7 is a perspective view showing a filter as obtained in Example 10;
FIG. 8 is a fragmentary schematic view showing a water purification system of Application Example; and
FIG. 9 shows the oxidation-reduction potential (mV) and silicic acid concentration (mg/L) of the water composition produced by the filter of Example 1 determined at different time.

Before the disclosure is described in greater detail, it should be noted that where considered appropriate, reference numerals or terminal portions of reference numerals have been repeated among the figures to indicate corresponding or analogous elements, which may optionally have similar characteristics.

According to this disclosure, a method of preparing a filter includes the steps of: (i) providing a precursor that includes an active composition and a binder, the active composition including a filtering material and a nano silicon material; and (ii) heating and pressing the precursor to obtain the filter in which the filtering material is bound with the nano silicon material through the binder.

According to this disclosure, the filtering material is a material that is capable of removing, absorbing or separating undesired substances from a to-be-treated solution (e.g., water). Examples of the filtering material suitable for this disclosure may include, but are not limited to, a porous filtering material (such as activated carbon, porous ceramic, zeolite, porous cerium oxide, bamboo charcoal, diatomaceous earth, medical stone, etc.), a non-porous filtering material (such as quartz sand) and the combination thereof. In certain embodiments, the filtering material is a porous filtering material. The porous filtering material may be in a powder form (such as activated carbon powder) and/or in a granular form (such as activated carbon granules). In an exemplary embodiment, the filtering material is the porous filtering material in the granular form.

According to this disclosure, the filtering material may have an average particle diameter ranging from 20 µm to 400 µm. In certain embodiments, the filtering material has an average particle diameter ranging from 20 µm to 100 µm, preferably from 30 µm to 100 µm, and more preferably from 40 µm to 80 µm. In other embodiments, the filtering material has an average particle diameter ranging from 100 µm to 400 µm, preferably from 150 µm to 250 µm.

According to this disclosure, the nano silicon material may have an average particle diameter ranging from 50 nm to 300 nm. In certain embodiments, the nano silicon material has an average particle diameter ranging from 100 nm to 250 nm. In yet other embodiments, the nano silicon material has an average particle diameter ranging from 100 nm to 220 nm.

According to this disclosure, the nano silicon material may include at least two groups of particles having different average particle diameters. In certain embodiments, the nano silicon material includes a first group of particles and a second group of particles. The first group of particles has an average particle diameter different from an average particle diameter of the second group of particles. In certain embodiments, the difference in the average particle diameter between the at least two groups of particles ranges from 50 nm to 150 nm. In an example of this disclosure, the nano silicon material includes three groups of particles, and the difference in the average particle diameter between any two of these groups of particles ranges from 50 nm to 150 nm.

In certain embodiments, the active composition includes a plurality of active particles, and each of the active particles has a core of the filtering material and the nano silicon material adsorbed on the core of the filtering material. In certain embodiments, the nano silicon material is present in an amount ranging from 10 wt% to 40 wt% based on 100 wt% of the active particles. In an exemplary embodiment, the nano silicon material is present in an amount ranging from 15 wt% to 40 wt% based on 100 wt% of the active particles. In another exemplary embodiment, the nano silicon material is present in an amount ranging from 30 wt% to 40 wt% based on 100 wt% of the active particles. In yet another exemplary embodiment, the nano silicon material is present in an amount ranging from 40 wt% to 80 wt% based on 100 wt% of the active particles. In still yet another exemplary embodiment, the nano silicon material is present in an amount ranging from 50 wt% to 70 wt% based on 100 wt% of the active particles.

According to this disclosure, in addition to binding the filtering material to nano silicon material, the binder can be used to bind granules of the filtering material together. For example, when the filtering material includes a plurality of activated carbon granules, the binder can bind certain or all of the activated carbon granules together. Examples of binder suitable for used in this disclosure may include, but are not limited to, polyethylene, polypropylene and the combination thereof. In certain embodiments, the binder is polyethylene. Polyethylene may include, but is not limited to, high density polyethylene (HDPE), liner low density polyethylene (LLDPE), ultra-high molecular weight polyethylene (UHMWPE) or combinations thereof. In an exemplary embodiment, the binder is ultra-high molecular weight polyethylene (UHMWPE). In another exemplary embodiment, the binder is UHMWPE which has an average molecular weight ranging from 1.5 x 10⁶ to 5 x 10⁶ g/mol and a density ranging from 0.92 to 0.95 g/cm³. In addition, the binder may have a plurality of pores. The binder having a plurality of pores may be formed from a plurality of binder particles connected with each other at a predetermined temperature and pressure.

In certain embodiments, based on 100 wt% of the precursor, the combination of the filtering material and the nano silicon material (i.e., the active composition) are present in an amount ranging from 55 wt% to 85 wt%, and the binder is present in an amount ranging from 15 wt% to 45 wt%. In an exemplary embodiment, based on 100 wt% of the precursor, the combination of the filtering material and the nano silicon material (i.e., the active composition) are present in an amount ranging from 65 wt% to 95 wt%, and the binder is present in an amount ranging from 5 wt% to 35 wt%. In other embodiments, based on 100 wt% of the precursor, the combination of the filtering material and the nano silicon material are present in an amount ranging from 55 wt% to 65 wt%, and the binder is present in an amount ranging from 35 wt% to 45 wt%. In yet other embodiments, based on 100 wt% of the precursor, the combination of the filtering material and the nano silicon material are present in an amount ranging from 75 wt% to 90 wt%, and the binder is present in an amount ranging from 10 wt% to 25 wt%.

According to this disclosure, the filtering material may include at least one filtering component which may be one of the examples of the filtering material as mentioned above. For example, the filtering material may include a first filtering component and a second filtering component that is the same or different from the first filtering component.

In an exemplary embodiment, the precursor is prepared by mixing a first mixture that contains the first filtering component, the nano silicon material and a portion of the binder with a second mixture that contains the second filtering component and the remainder of the binder. The weight ratio of the first mixture to the second mixture may range from 1.5 to 2.5. In another exemplary embodiment, the weight ratio of the first mixture to the second mixture ranges from 0.5 to 1.5.

In another exemplary embodiment, the precursor is prepared by mixing a mixture that contains the first filtering component and the nano silicon material with the binder and the second filtering component.

In certain embodiments, the precursor may be prepared by forming at least one active layer and forming at least one filtering layer that is disposed on a surface of the at least one active layer. The at least one active layer includes the nano silicon material, a portion of the filtering material and a portion of the binder. The at least one filtering layer includes the remainder of the filtering material and the remainder of the binder.

In certain embodiments, when the filtering material includes the first filtering component and the second filtering component that is different from the first filtering component, the portion of the filtering material in the at least one active layer is the first filtering component, and the remainder of the filtering material in the at least one filtering layer is the second filtering component.

In certain embodiments, the precursor may be prepared by forming at least two active layers and forming at least one binding layer that is interposed between the at least two active layers. The at least two active layers includes the active composition and a portion of the binder. The at least one binding layer includes the remainder of the binder.

According to this disclosure, in step (ii) of the method, the precursor is heated and pressed in a mold at a predetermined pressure and temperature.

In certain embodiments, the precursor is heated at a temperature ranging from 160°C to 250°C and pressed at a pressure ranging from 150 kg/cm² to 360 kg/cm². In other embodiments, the precursor is heated at a temperature ranging from 180°C to 200°C and pressed at a pressure ranging from 200 kg/cm² to 360 kg/cm². In yet other embodiments, the precursor is heated at a temperature that is lower than 100°C (for example, at 90°C), and pressed at a pressure ranging from 150 kg/cm² to 360 kg/cm².

In an exemplary embodiment, in the heating and pressing step, the precursor is heated to 180°C to 200°C under a pressure of 215 kg/cm² in 50 to 70 minutes, and then heated at 180°C to 200°C under a pressure of 215 kg/cm² for 50 to 70 minutes.

The disclosure also provides a filter made by the abovementioned method. The filter includes an active composition and a binder, the active composition including a nano silicon material and a filtering material that is bound with the nano silicon material through the binder. In certain embodiments, the binder and/or the filtering material may have a plurality of pores.

In certain embodiments, the active composition of the filter includes a plurality of active particles. Each of the active particles has a core of the filtering material and nano silicon material adsorbed on the core of the filtering material.

The filtering material may include a first filtering component and a second filtering component that is the same or different from the first filtering component. In certain embodiments, the filtering material includes the first filtering component and the second filtering component that is different from the first filtering component, and the second filtering component, the first filtering component and the nano silicon material are bound together through the binder. In such embodiments, the nano silicon material is adsorbed on the first and second filtering components in such a manner that the amount of the nano silicon material adsorbed on the second filtering component is less than the amount of the nano silicon material adsorbed on the first filtering component.

According to the disclosure, the filter may include a heat-pressed active layer and at least one heat-pressed filtering layer (partially or entirely) disposed on the heat-pressed active layer. The heat-pressed active layer includes the nano silicon material, a portion of the filtering material and a portion of the binder. The heat-pressed filtering layer includes the remainder of the filtering material and the remainder of the binder. In certain embodiments, the filter includes two of the heat-pressed filtering layers that are respectively disposed on two opposite surfaces of the heat-pressed active layer.

In certain embodiments, the filter includes at least two heat-pressed active layer and at least one heat-pressed binding layer that is interposed between and binds the at least two heat-pressed active layers. The at least two heat-pressed active layers includes the active composition and a portion of the binder, and the heat-pressed binding layer includes the remainder of the binder.

It should be noted that detailed descriptions thereof of the active composition, the active particles, the binder, the filtering material (including the first and second filtering components) and the nano silicon material of the filter as mentioned above can be referred to those defined in the method for preparing the filter according to this disclosure, and thus further details thereof are not provided for the sake of brevity.

The disclosure will be further described by way of the following examples. However, it should be understood that the following examples are solely intended for the purpose of illustration and should not be construed as limiting the disclosure in practice.

### EXAMPLES:

### Preparation of silicon-carbon (Si-C) composite

### Preparative Examples 1 to 5 (PE1-PE5)

Silicon-carbon (Si-C) composite of Preparative Examples 1 to 5 were respectively prepared according to the following steps A and B.

In step A, nano silicon material prepared by the applicants was evenly mixed with alcohol having 99.5% (v/v) purity to obtain a nano silicon slurry with a solid content of 15 wt%. The nano silicon material includes 40 wt% of a first group of particles having an average particle diameter of 100 nm, 40 wt% of a second group of particles having an average particle diameter of 150 nm, and 20 wt% of a third group of particles having an average particle diameter of 250 nm.

In step B, a given amount of coconut shell activated carbon powder serving as a filtering material (Manufacturer: Goldstar Carbon Tech Inc., Taiwan) was added under stirring to the nano silicon slurry obtained in step A, and the mixture thus obtained was dried in a vacuum oven to obtain the silicon-carbon (Si-C) composite.

The amounts of the nano silicon slurry and the coconut shell activated carbon powder, the particle size of the coconut shell activated carbon powder, and the nano silicon material content of the Si-C composite with respect to PE1 to PE5 are summarized in Table 1.

**Table 1**

| | Amount of nano silicon slurry (g) | Amount of coconut shell activated carbon powder (g) | Particle size of coconut shell activated carbon powder (µm) | Nano silicon material content of Si-C composite (wt%) |
|---|---|---|---|---|
| PE1 | 500 | 140 | 40∼80 | 34.9 |
| PE2 | 500 | 350 | 40∼80 | 17.6 |
| PE3 | 500 | 175 | 150∼380 | 30 |
| PE4 | 500 | 175 | 150∼250 | 30 |
| PE5 | 500 | 425 | 150∼250 | 15 |

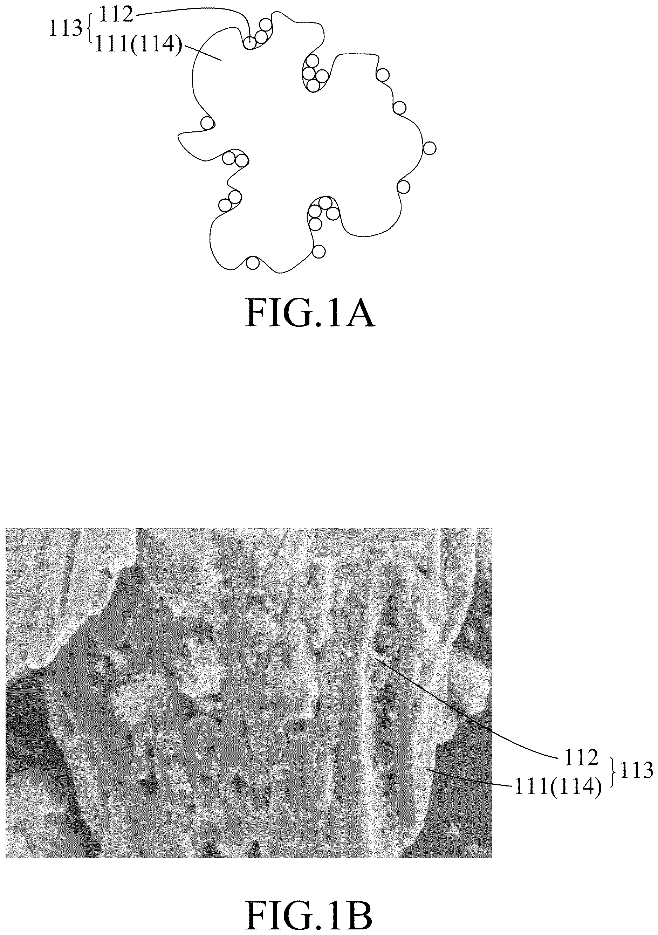

Referring to FIGS. 1A and 1B, the Si-C composites of PE1 to PE5 respectively include a plurality of active particles 113. Each of the active particles 113 includes a core 114 of the filtering material 111 (i.e., coconut shell activated carbon), and the nano silicon material 112 adsorbed on the core 114 of the filtering material 111.

### Preparation of filter

### Example 1

The filter of Example 1 was prepared according to the following steps (i) and (ii).

In step (i), a precursor was prepared by mixing an active composition (that includes 15 g of coconut shell activated carbon (serving as a filtering material) having an average particle diameter ranging from 40 to 80 µm, and 15 g of nano silicon material having an average particle diameter of 200 nm) with 20 g of ultra-high molecular weight polyethylene (serving as a binder) (Manufacturer: Celanese Corporation; Model: GUR2122).

In step (ii), the precursor that is placed in a stainless steel mold, was heated to 190°C under a pressure of 215 kg/cm² in 60 minutes, and then was heated at 190°C under a pressure of 215 kg/cm² for 60 minutes, so as to obtain a filter of Example 1.

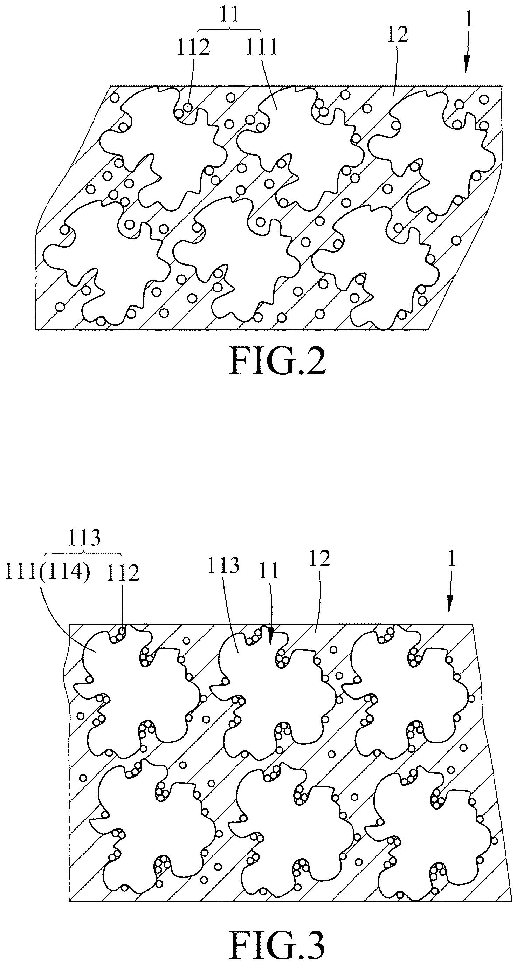

Referring to FIG. 2, the filter of Example 1 includes a heat-pressed active layer 1 that includes the active composition 11 and the binder 12 that binds the filtering material 111 and the nano silicon material 112. It should be noted that the porous structure of the binder 12 is not shown in FIG. 2 for simplicity.

### Example 2

The filter of Example 2 was prepared by procedures similar to those of Example 1, except that the binder 12 used in step (i) is ultra-high molecular weight polyethylene commercially available from Mitsui Chemicals, Inc. (Model: XM-220).

### Example 3

The filter of Example 3 was prepared by procedures similar to those of Example 1, except that the active composition 11 used in step (i) was 30 g of the Si-C composite as obtained in PE1.

Referring to FIG. 3, the filter of Example 3 includes a heat-pressed active layer 1 that includes the active composition 11 (i.e., Si-C composite of FIG.1) and the binder 12 binding the active particles 113 of the Si-C composite.

It should be noted that, in certain embodiments, a second filtering component which may be the same as the coconut shell activated carbon powder of the Si-C composite used in this example (serving as a first filtering component) or different therefrom (such as porous ceramic), was added in step (i) to prepare the precursor. Therefore, the heat-pressed active layer 1 of the filter thus prepared includes the first filtering component that adsorbs the nano silicon material in a relatively higher amount, and the second filtering component that adsorbs the nano silicon material in a relatively lesser amount and even adsorbs substantially no nano silicon material.

### Example 4

The filter of Example 4 was prepared by procedures similar to those of Example 3, except that the active composition used in step (i) was the Si-C composite as obtained in PE2.

### Example 5

The filter of Example 5 was prepared by procedures similar to that of Example 1, except that the precursor obtained in step (i) was prepared as follows. Firstly, 3 g of coconut shell activated carbon was mixed with 2 g of ultra-high molecular weight polyethylene (Model: GUR2122) to obtain a first filtering layer. Then, an active layer formed by mixing 6 g of the Si-C composite as obtained in PE1 with 4 g of ultra-high molecular weight polyethylene (Model:GUR2122) was disposed on the first filtering layer. Finally, a second filtering layer formed by mixing 1.2 g of the coconut shell activated carbon and 0.8 g of the ultra-high molecular weight polyethylene was disposed on the active layer.

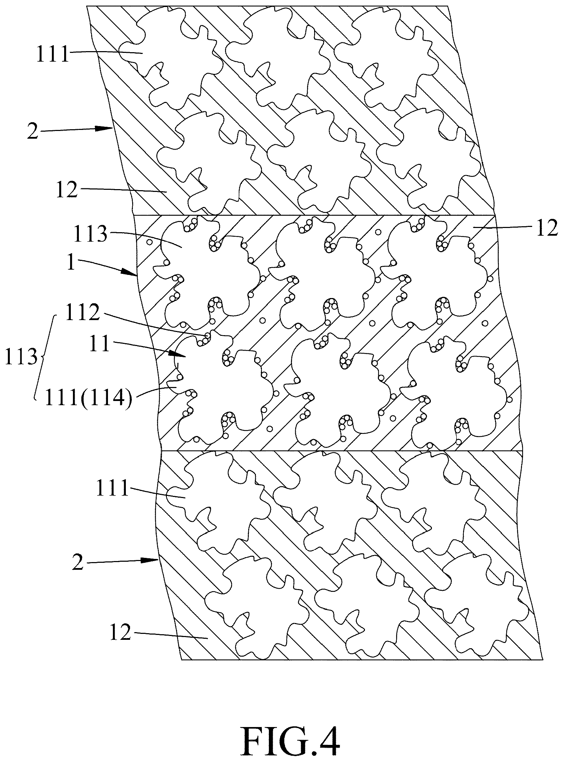

Referring to FIG. 4, the filter of Example 5 includes a heat-pressed active layer 1 that is obtained from the active layer, and two heat-pressed filtering layers 2 that are respectively disposed on two opposite surfaces of the heat-pressed active layer 1 and that are respectively obtained from the first and second filtering layers. The heat-pressed active layer 1 includes the Si-C composite 11 of FIG.1 and the binder 12 (i.e., ultra-high molecular weight polyethylene) binding the active particles 113. The two heat-pressed filtering layers 2 include the binder 12 and the filtering material 111 (i.e., the coconut shell activated carbon).

In addition, in a variation of this example, the heat-pressed active layer 1 is covered by at least one of the heat-pressed filtering layers. In another variation of this example, the heat-pressed active layer 1 of this example may be replaced with that as obtained in Example 1.

It should be noted that, the filter may have only one heat-pressed filtering layer 2, which, for example, is disposed downstream of the heat-pressed active layer 1 along a water flow direction.

### Examples 6 to 7

Each of the filters of Examples 6 and 7 was prepared by procedures similar to that of Example 5, except that the precursor obtained in step (i) was prepared as follows. To be specific, a mixture of the Si-C composite as obtained in PE3 and the ultra-high molecular weight polyethylene (Model: GUR2122) was placed in a stainless steel mold in a hollow cylindrical shape to obtain a first active layer. Then, a first binding layer composed of the ultra-high molecular weight polyethylene (Model: GUR2122) was disposed on the first active layer, and a second active layer formed by mixing the SiC composite as obtained in PE3 with the ultra-high molecular weight polyethylene (Model: GUR2122) was disposed on the first binding layer. Afterwards, a second binding layer composed of the ultra-high molecular weight polyethylene (Model: GUR2122) was disposed on the second active layer, and a third active layer formed by mixing the Si-C composite as obtained in PE3 with the ultra-high molecular weight polyethylene (Model: GUR2122) was then disposed on the second binding layer.

The total weight of the first, second and third active layers of the filters of Examples 6 and 7 are respectively 235 g and 375 g. The weights of the binding layers of the filters in Examples 6 and 7 were respectively 6 g and 8 g. In addition, based on 100 wt% of the first, second and third active layers of each of the filters of Example 6 and 7, the amount of the Si-C composite is 20 wt%, and the amount of the ultra-high molecular weight polyethylene is 80 wt%.

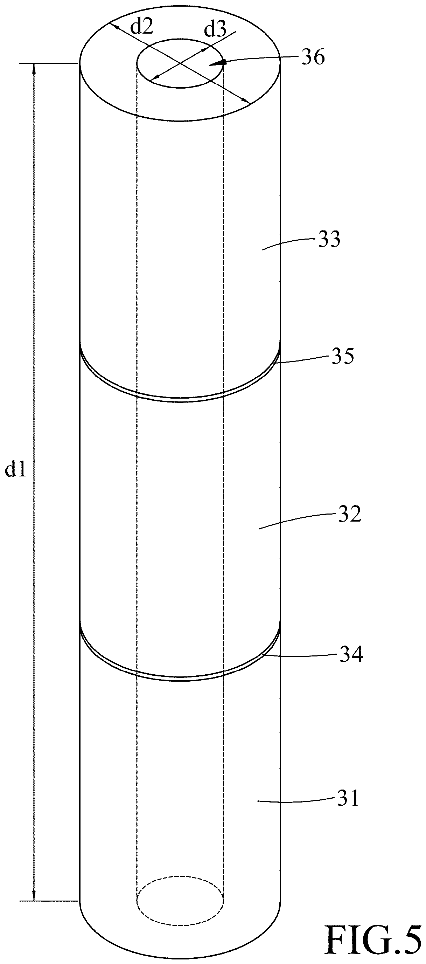

Referring to FIG. 5, the each of the filters of Examples 6 and 7 includes a first heat-pressed active layer 31, a second heat-pressed active layer 32, a third heat-pressed active layer 33, a first heat-pressed binding layer 34 that is disposed between the first and second heat-pressed active layers 31, 32 to bind the first and second heat-pressed active layers 31, 32, a second heat-pressed binding layer 35 that is disposed between the second and third heat-pressed active layers 32, 33 to bind the second and third heat-pressed active layers 32, 33, and a central through hole 36 extending through the first to third heat-pressed active layers 31, 32, 33 and the first and second heat-pressed binding layers 34, 35. The first, second and third heat-pressed active layers 31, 32, 33 are respectively obtained from the abovementioned first, second and third active layers. The first and second heat-pressed binding layers 34, 35 are respectively obtained from the abovementioned first and second binding layers. The filter of Example 6 has a height d1 of 239 mm, an outer diameter d2 of 46.5 mm, and an inner diameter d3 of 20 mm. The filter of Example 7 has a height d1 of 237 mm, an outer diameter d2 of 64 mm, and an inner diameter d3 of 34 mm.

### Example 8

The filter of Example 8 was prepared by procedures similar to those of Example 3, except that the precursor of this example and was prepared by mixing 77.5 wt% of the Si-C composite as obtained in PE3 with 22.5 wt% of the ultra-high molecular weight polyethylene (Model: GUR2122.

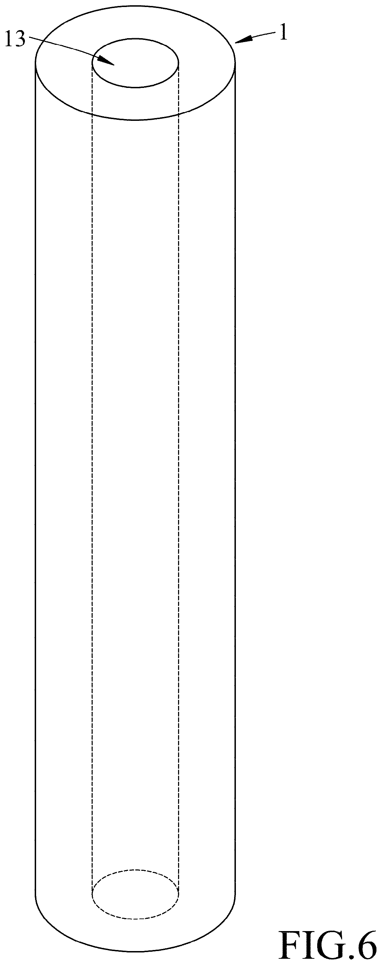

Referring to FIG. 6, the filter of Example 8 is similar to that of Example 3, except that the heat-pressed active layer 1 is formed with a central through hole 13. Water can flow through the heat-pressed active layer 1 to the central through hole 13, and then flow out of the filter through the central through hole 13.

### Example 9

The filter of Example 9 was prepared by procedures similar to those of Example 8, except that the precursor obtained in step (i) was prepared as follows. A first mixture composed of 75 wt% of the Si-C composite of PE4 and 25 wt% of the ultra-high molecular weight polyethylene (Model: GUR2122), was mixed with a second mixture composed of 75 wt% of the coconut shell activated carbon powder and 25 wt% of the ultra-high molecular weight polyethylene (Model: GUR2122) in a weight ratio of 2:1 to obtain the precursor.

Similar to the filter of Example 8 (see FIG. 6), the filter of Example 9 includes a heat-pressed active layer that contains an active composition and a binder (i.e., ultra-high molecular weight polyethylene). The active composition includes a first filtering component (i.e., the coconut shell activated carbon powder of the Si-C composite in the first mixture), a second filtering component (i.e., the coconut shell activated carbon powder in the second mixture) and the nano silicon material, which are bound together through the binder. It should be noted that, although the first and second filtering components used in this example are the same, they may be different from each other in other examples.

### Example 10

The filter of Example 10 was prepared by procedures similar to those of Example 9, except that the precursor obtained in step (i) was prepared by first forming a first filtering layer that is composed of the second mixture as obtained in Example 9, and then forming an active layer that is composed of the first mixture as obtained in Example 9 and that surrounds around the first filtering layer and, and subsequently forming a second filtering layer that is composed of the second mixture as obtained in Example 9 and that surrounds around the active layer. The weight ratio of the first and second mixtures of this example is the same as that of Example 9.

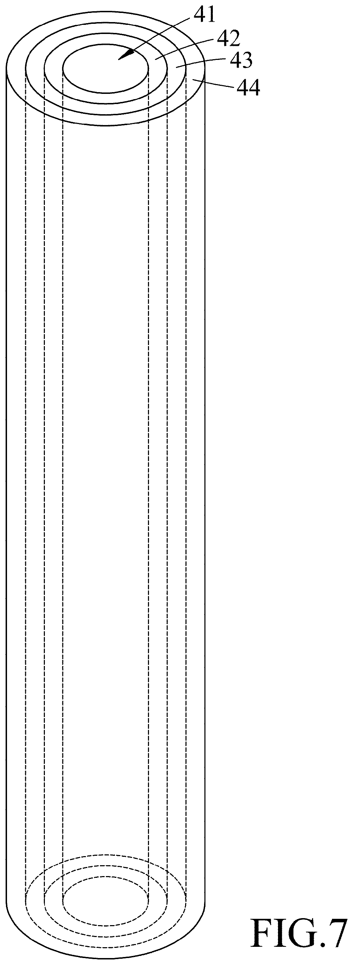

Referring to FIG. 7, the filter of Example 10 includes a heat-pressed first filtering layer 42 formed with a central through hole 41, a heat-pressed active layer 43 attached onto and surrounding around a peripheral surface of the heat-pressed first filtering layer 42, and a heat-pressed second filtering layer 44 attached onto and surrounding around a peripheral surface of the heat-pressed active layer 43, which are respectively obtained from the first filtering layer, the active layer and the second filtering layer.

It should be mentioned that, the filter of Example 5 (as shown in FIG. 4) may be so prepared to have a structure similar to that of Example 10. Specifically, the two heat-pressed filtering layers 2 as shown in FIG. 4 may be corresponded to the first and second heat-pressed filtering layers 42, 44 of this example, and the heat-pressed active layer 1 as shown in FIG. 4 may be corresponded to the heat-pressed active layer 43 of this example.

In addition, it should be noted that the Si-C composite used in the first mixture of Examples 9 and 10 may be the Si-C composite as obtained in PE5 that has a lower amount of nano silicon material (15 wt %), which can increase the stability of the filter thus prepared.

### Application Example

### Water purification system

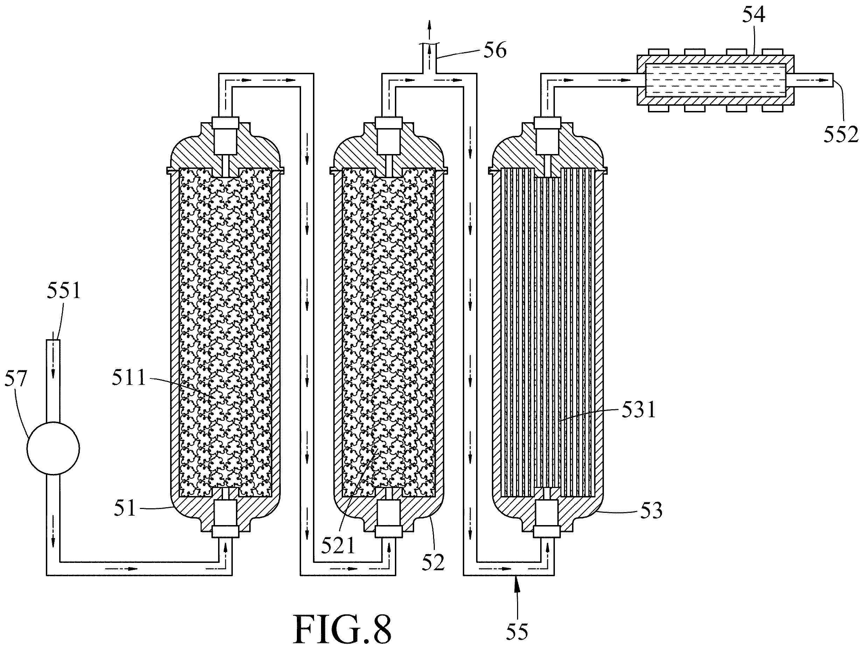

Referring to FIG. 8, a water purification system for producing a water composition containing silicic acid and hydrogen gas, includes a first filter assembly 51, a second filter assembly 52, a third filter assembly 53, and an ultraviolet light sterilizing unit 54, each of which is disposed sequentially along a water flow direction. The water purification system further includes a pipeline unit 55 that fluidly connects the first, second and third filter assemblies 51, 52, 53, and that having an inlet 551 for receiving a to-be-treated water and an outlet 552 for discharging the water composition produced by the water purification system.

The first filter assembly 51 is disposed between the inlet 551 and the second filter assembly 52, and a first filter 511 is disposed therein. The first filter 511 may be any filter as obtained in Examples 1 to 10. It is worth mentioning that, when the first filter 511 is one of the filters of Examples 6 to 10, a hollow fiber membrane may be disposed in the central through hole of the first filter 511. Moreover, the number of the first filter assembly 51 of the water purification system is not limited to one. That is, the water purification system of this disclosure may include more than two of the first filter assemblies 51, so as to produce the water composition having a good quality and stability.

The second filter assembly 52 is disposed between the first filter assembly 51 and the third filter assembly 53 and a second filter 521 is disposed therein. The second filter 521 includes a material capable of filtering water. In this example, the second filter 521 is an activated carbon added with nano silver.

The third filter assembly 53 is disposed between the second filter assembly 52 and the ultraviolet light sterilizing unit 54 and a third filter 531 is disposed therein. The third filter 531 includes a material capable of filtering water. In this example, the third filter 531 is a hollow fiber membrane. Preferably, the hollow fiber membrane has a pore size of 0.1 µm. It should be noted that, if the first filter 511 is the one of Examples 6 to 9 having a hollow fiber membrane disposed in the central through hole, the third filter assembly may be omitted.

The ultraviolet light sterilizing unit 54 is disposed between the third filter assembly 53 and the outlet 552 and is used for sterilizing the water composition thus produced.

The water purification system of this Application Example further includes a discharge unit 56 that is disposed between the second filter assembly 52 and the third filter assembly 53 for periodically discharging liquid, gas or the combination thereof in an automatic manner. In addition, the water purification system further includes a measuring unit 57 disposed between the first filter assembly 51 and the inlet 551 for measuring the flow rate of the to-be-treated water. It should be noted that, water may flow into upper end of the third filter assembly 53 and flow out from lower end of the third filter assembly to facilitate gas discharge.

It should be noted that, at least one of the second filter assembly 52 and the ultraviolet light sterilizing unit 54 maybe disposed upstream of the first filter assembly 51 so as to reduce the number of microorganisms (e.g., bacteria, etc.) entering the first filter assembly 51. For example, the first filter assembly 51 may be disposed between the second filter assembly 52 and the ultraviolet light sterilizing unit 54. Alternatively, the second filter assembly 52 and the ultraviolet light sterilizing unit 54 may be disposed upstream of the first filter assembly 51. In addition, the water purification system may include a plurality of the second filter assemblies 52 and a plurality of the ultraviolet light sterilizing units 54. The second filter assemblies 52 and/or the ultraviolet light sterilizing units 54 may be simultaneously disposed upstream and downstream of the first filter assembly 51.

### Measurement of oxidation-reduction potential and silicic acid concentration of a water composition produced by the filter of Example 1

### Experimental Procedures:

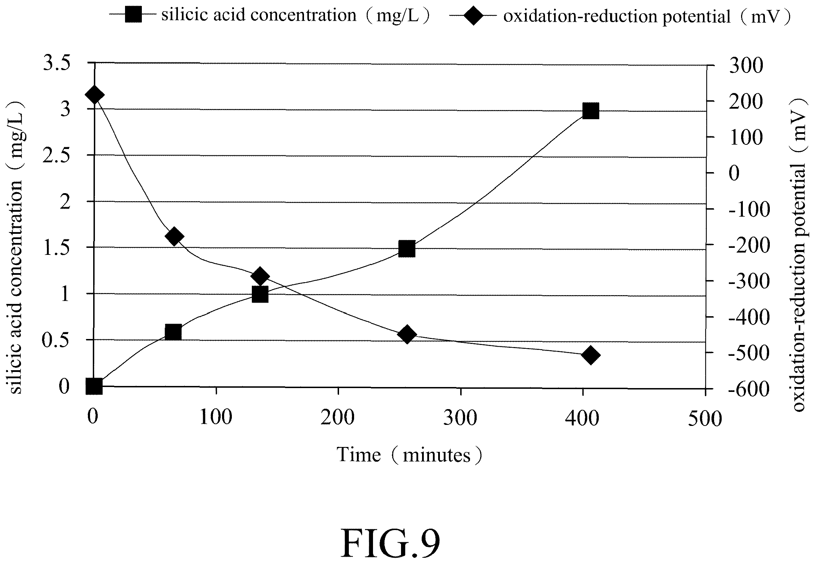

4.13 g of the filter as obtained in Example 1 was placed into a container containing 1 liter of pure water and stood for a predetermined time to produce a water composition containing silicic acid and hydrogen gas. Oxidation-reduction potential (mV) and silicic acid concentration (mg/L) of the water composition produced by the filter of Example 1 were measured at certain time intervals, and the results are shown in FIG. 9. The oxidation-reduction potential of the water composition was measured using electrodes (Manufacturer: JAQUA; Model: EO221) and an oxidation-reduction potential analyzer (Manufacturer: Horiba Ltd.; Model: F-51). The silicic acid concentration of the water composition was determined using a silicate test kit (MColortest™, Merck). It should be noted that, the higher the hydrogen gas concentration in the water composition is, the lower the measured oxidation-reduction potential is.

### Results:

As shown in FIG. 9, as time increases, the measured oxidation-reduction potential gradually decreases (i.e., the hydrogen gas concentration gradually increases), and the silicic acid concentration gradually increases. This result indicates that the filter of this disclosure can not only effectively prevent filter plugging that may be caused by the separation of the nano silicon material from the filter, but also stably increase the hydrogen gas and silicic acid concentration in the water composition thus produced.

### Measurement of oxidation-reduction potential and silicic acid concentration of water compositions produced by water purification system containing the filters of Examples 4, 7 and 9

### Experimental Procedures:

Each of the filters of Examples 4, 7 and 9 was used as the first filter assembly 51 of the water purification system of the abovementioned Application Example, so as to form three water purification systems A, B and C which respectively contain the filters of Examples 4, 7 and 9. The oxidation-reduction potential (mV) and the silicic acid concentration (mg/L) of the water composition produced from each of the water purification systems A, B and C were respectively measured using electrodes (Manufacturer: JAQUA; Model: EO221) and an oxidation-reduction potential analyzer (Manufacturer: Horiba Ltd.; Model: F-51), and using a silicate test kit (MColortest™, Merck).

### Results:

**Table 2**

| Water purification systems | Oxidation-reduction potential (mV) | Silicic acid concentration (mg/L) |
|---|---|---|
| A | Less than -600 | 42 |
| B | -626 | 30 |
| C | -500 | 24 |

As shown in Table 2, the measured oxidation-reduction potential of the water composition produced by each of the water purification systems A, B and C was below -500 mV, indicating that the hydrogen gas concentration in the water composition thus produced was high. In addition, the silicic acid concentration of the water composition produced by each of the water purification systems A, B and C was also high. These results implies that when the filter of each of Examples 4,7 and 9 is used as the first filter assembly 51 of the water purification system of this disclosure, filter plugging does not occur easily, and the hydrogen gas concentration and the silicic acid concentration in the water composition thus produced can be stably increased.

In summary, by inclusion of the binder in the precursor, after the heating and pressing process, the nano silicon material could be bound to the filtering material through the binder, and thus is not easily separated from the filtering material. The filter thus prepared could effectively react with the to-be treated water to stably produce a water composition containing hydrogen gas and silicic acid in high concentration, and prevent itself from plugging.

## Claims

1. A method of preparing a filter, **characterized by** the steps of:
(i) providing a precursor that includes an active composition (11) and a binder (12), the active composition (11) including a filtering material (111) and nanosized silicon particles (112), and
(ii) heating and pressing the precursor to obtain the filter in which the filtering material (111) is bound with the nanosized silicon particles (112) through the binder.

2. The method as claimed in Claim 1, **characterized in that** the active composition (11) includes a plurality of active particles (113), each of the active particles (113) having a core (114) of the filtering material (111) and the nanosized silicon particles (112) adsorbed on the core (114) of the filtering material (111).

3. The method as claimed in Claim 1 or 2, **characterized in that** the precursor is prepared by:
forming at least one active layer that includes the nanosized silicon particles (112), a portion of the filtering material (111) and a portion of the binder (12), and
forming at least one filtering layer that is disposed on a surface of the at least one active layer and that includes the remainder of the filtering material (111) and the remainder of the binder (12).

4. The method as claimed in any one of Claims 1 to 3, **characterized in that** the filtering material (111) includes a first filtering component and a second filtering component that is the same or different from the first filtering component, and the precursor is prepared by mixing a first mixture that contains the first filtering component, the nanosized silicon particles (112) and a portion of the binder (12) with a second mixture that contains the second filtering component and the remainder of the binder (12).

5. The method as claimed in any one of Claims 1 to 3, **characterized in that** the filtering material (111) includes a first filtering component and a second filtering component that is the same or different from the first filtering component, the precursor is prepared by mixing a mixture that contains the first filtering component (111) and the nanosized silicon particles (112) with the binder (12) and the second filtering component.

6. A filter **characterized by** an active composition (11) and a binder (12), said active composition (11) including nanosized silicon particles (112) and a filtering material (111) that is bound with said nanosized silicon particles (112) through said binder (12).

7. The filter as claimed in Claim 6, **characterized in that** said binder (12) has a plurality of pores.

8. The filter as claimed in Claim 6 or 7, **characterized in that** said active composition (11) includes a plurality of active particles (113), each of the active particles (113) having a core (114) of the filtering material (111) and the nanosized silicon particles (112) adsorbed on the core (114) of the filtering material (111).

9. The filter as claimed in any one of Claims 6 to 8, further **characterized by** a heat-pressed active layer (1) and at least one heat-pressed filtering layer (2) disposing on said pressed active layer (1), said heat-pressed active layer (1) including said nanosized silicon particles (112), a portion of said filtering material (111) and a portion of said binder (12), and said heat-pressed filtering layer (2) including the remainder of said filtering material (111) and the remainder of said binder (12).

10. The filter as claimed in Claim 9, further **characterized by** two of said heat-pressed filtering layers (2) respectively disposed on two opposite surfaces of said heat-pressed active layer (1).

11. The filter as claimed in any one of Claims 6 to 8, further **characterized by** at least two heat-pressed active layer (1) and at least one heat-pressed binding layer interposed between said at least two heat-pressed active layers (1), said at least two heat-pressed active layers (1) including said nanosized silicon particles (112) and a portion of said binder (12), and said heat-pressed binding layer including the remainder of said binder (12).

12. The filter as claimed in any one of Claims 6 to 11, **characterized in that** said nanosized silicon particles (112) are present in an amount ranging from 15 wt% to 40 wt% based on 100 wt% of said active particles (113).

13. The filter as claimed in any one of Claims 6 to 11, **characterized in that** said nanosized silicon particles (112) are present in an amount ranging from 40 wt% to 80 wt% based on 100 wt% of said active particles (113).

14. The filter as claimed in any one of Claims 6 to 13, **characterized in that** said filtering material (111) includes a first filtering component and a second filtering component that is the same or different from the first filtering component, said second filtering component binding to said first filtering component and said nanosized silicon particles (112) through said binder (12).

15. The filter as claimed in any one of Claims 6 to 13, **characterized in that** said filtering material (111) includes a first filtering component and a second filtering component that is the same or different from said first filtering component, said nanosized silicon particles (112) being adsorbed on said first and second filtering components in such a manner that the amount of said nanosized silicon particles (112) adsorbed on said second filtering component is less than the amount of said nanosized silicon particles (112) adsorbed on said first filtering component.

## Patentansprüche

1. Verfahren zum Herstellen eines Filters, **gekennzeichnet durch** die folgenden Schritte:
(i) Bereitstellen eines Vorläufers, der eine aktiv wirksame Zusammensetzung (11) und ein Bindemittel (12) beinhaltet, wobei die aktiv wirksame Zusammensetzung (11) ein Filtermaterial (111) und Siliziumpartikel (112) im Nanogrößenbereich beinhaltet, und
(ii) Erhitzen und Pressen des Vorläufers, um den Filter zu erhalten, in dem das Filtermaterial (111) durch das Bindemittel mit den Siliziumpartikeln (112) im Nanogrößenbereich gebunden wird.

2. Verfahren nach Anspruch 1, **dadurch gekennzeichnet, dass** die aktiv wirksame Zusammensetzung (11) eine Vielzahl von aktiv wirksamen Partikeln (113) beinhaltet, wobei jeder von den aktiv wirksamen Partikeln (113) einen Kern (114) des Filtermaterials (111) und die Siliziumpartikel (112) im Nanogrößenbereich, die an dem Kern (114) des Filtermaterials (111) adsorbiert sind, aufweist.

3. Verfahren nach Anspruch 1 oder 2, **dadurch gekennzeichnet, dass** der Vorläufer wie folgt hergestellt wird:
Formen von mindestens einer aktiv wirksamen Lage, welche die Siliziumpartikel (112) im Nanogrößenbereich, einen Teil des Filtermaterials (111) und einen Teil des Bindemittels (12) beinhaltet, und
Formen von mindestens einer Filterlage, die auf einer Oberfläche der mindestens einen aktiv wirksamen Lage angeordnet ist und die den Rest des Filtermaterials (111) und den Rest des Bindemittels (12) beinhaltet.

4. Verfahren nach einem der Ansprüche 1 bis 3, **dadurch gekennzeichnet, dass** das Filtermaterial (111) eine erste Filterkomponente aufweist und eine zweite Filterkomponente, die gleich oder unterschiedlich zu der ersten Filterkomponente ist, und wobei der Vorläufer durch Mischen eines ersten Gemischs, das die erste Filterkomponente, die Siliziumpartikel (112) im Nanogrößenbereich und einen Teil des Bindemittels (12) enthält, mit einem zweiten Gemisch, das die zweite Filterkomponente und den Rest des Bindemittels (12) enthält, hergestellt wird.

5. Verfahren nach einem der Ansprüche 1 bis 3, **dadurch gekennzeichnet, dass** das Filtermaterial (111) eine erste Filterkomponente enthält und eine zweite Filterkomponente, die gleich oder unterschiedlich zu der ersten Filterkomponente ist, wobei der Vorläufer durch Mischen eines Gemischs, das die erste Filterkomponente (111) und die Siliziumpartikel (112) im Nanogrößenbereich enthält, mit dem Bindemittel (12) und der zweiten Filterkomponente hergestellt wird.

6. Filter, **gekennzeichnet durch** eine aktiv wirksame Zusammensetzung (11) und einem Bindemittel (12), wobei die aktiv wirksame Zusammensetzung (11) Siliziumpartikel (112) im Nanogrößenbereich und ein Filtermaterial (111), das durch das Bindemittel (12) mit den Siliziumpartikeln (112) im Nanogrößenbereich gebunden ist, beinhaltet.

7. Filter nach Anspruch 6, **dadurch gekennzeichnet**, das das Bindemittel (12) eine Vielzahl von Poren aufweist.

8. Filter nach Anspruch 6 oder 7, **dadurch gekennzeichnet, dass** die aktiv wirksame Zusammensetzung (11) eine Vielzahl von aktiv wirksamen Partikeln (113) beinhaltet, wobei jeder der aktiv wirksamen Partikel (113) einen Kern (114) des Filtermaterials (111) und die Siliziumpartikel (112) im Nanogrößenbereich, die an dem Kern (114) des Filtermaterials (111) adsorbiert sind, aufweist.

9. Filter nach einem der Ansprüche 6 bis 8, weiter **gekennzeichnet durch** eine heißgepresste, aktiv wirksame Lage (1) und mindestens eine heißgepresste Filterlage (2), die an der gepressten, aktiv wirksamen Lage (1) angeordnet ist, wobei die heißgepresste, aktiv wirksame Lage (1) die Siliziumpartikel (112) im Nanogrößenbereich, einen Teil des Filtermaterials (111) und einen Teil des Bindemittels (12) beinhaltet und wobei die heißgepresste Filterlage (2) den Rest des Filtermaterials (111) und den Rest des Bindemittels (12) beinhaltet.

10. Filter nach Anspruch 9, weiter **dadurch gekennzeichnet, dass** zwei von den heißgepressten Filterlagen (2) jeweils an zwei gegenüberliegenden Oberflächen der heißgepressten, aktiv wirksamen Lage (1) angeordnet sind.

11. Filter nach einem der Ansprüche 6 bis 8, weiter **dadurch gekennzeichnet, dass** mindestens zwei heißgepresste, aktiv wirksame Lagen (1) und mindestens eine heißgepresste Bindungslage zwischen den mindestens zwei heißgepressten, aktiv wirksamen Lagen (1) eingefügt sind, wobei die mindestens zwei heißgepressten, aktiv wirksamen Lagen (1) die Siliziumpartikel (112) im Nanogrößenbereich und einen Teil des Bindemittels (12) beinhalten, und die heißgepresste Bindungslage den Rest des Bindemittels (12) beinhaltet.

12. Filter nach einem der Ansprüche 6 bis 11, **dadurch gekennzeichnet, dass** die Siliziumpartikel (112) im Nanogrößenbereich in einer Menge im Bereich von 15 Gew.-% bis 40 Gew.-%, basierend auf 100 Gew.-% der aktiv wirksamen Partikel (113), vorhanden sind.

13. Filter nach einem der Ansprüche 6 bis 11, **dadurch gekennzeichnet, dass** die Siliziumpartikel (112) im Nanogrößenbereich in einer Menge im Bereich von 40 Gew.-% bis 80 Gew.-%, basierend auf 100 Gew.-% der aktiv wirksamen Partikel (113), vorhanden sind.

14. Filter nach einem der Ansprüche 6 bis 13, **dadurch gekennzeichnet, dass** das Filtermaterial (111) eine erste Filterkomponente und eine zweite Filterkomponente, die gleich oder unterschiedlich zu der ersten Filterkomponente ist, beinhaltet, wobei die zweite Filterkomponente durch das Bindemittel (12) an die erste Filterkomponente und die Siliziumpartikel (112) im Nanogrößenbereich gebunden wird.

15. Filter nach einem der Ansprüche 6 bis 13, **dadurch gekennzeichnet, dass** das Filtermaterial (111) eine erste Filterkomponente und eine zweite Filterkomponente, die gleich oder unterschiedlich zu der ersten Filterkomponente ist, beinhaltet, wobei die Siliziumpartikel (112) im Nanogrößenbereich an den ersten und zweiten Filterkomponenten auf eine Weise adsorbiert werden, sodass die Menge der Siliziumpartikel (112) im Nanogrößenbereich, die an der zweiten Filterkomponente adsorbiert ist, geringer ist als die Menge der Siliziumpartikel (112) im Nanogrößenbereich, die an der ersten Filterkomponente adsorbiert ist.

## Revendications

1. Procédé de préparation d'un filtre, **caractérisé par** les étapes consistant à :
(i) fournir un précurseur qui comporte une composition active (11) et un liant (12), la composition active (11) comportant un matériau filtrant (111) et des particules nanométriques de silicium (112), et
(ii) chauffer et presser le précurseur pour obtenir le filtre dans lequel le matériau filtrant (111) est lié aux particules nanométriques de silicium (112) par le liant.

2. Procédé tel que revendiqué dans la revendication 1, **caractérisé en ce que** la composition active (11) comporte une pluralité de particules actives (113), chacune des particules actives (113) ayant un noyau (114) du matériau filtrant (111) et les particules nanométriques de silicium (112) étant adsorbées sur le noyau (114) du matériau filtrant (111).

3. Procédé tel que revendiqué dans la revendication 1 ou 2, **caractérisé en ce que** le précurseur est préparé par :
la formation d'au moins une couche active qui comporte les particules nanométriques de silicium (112), une partie du matériau filtrant (111) et une partie du liant (12), et
la formation d'au moins une couche filtrante qui est disposée sur une surface de l'au moins une couche active et qui comporte le reste du matériau filtrant (111) et le reste du liant (12).

4. Procédé tel que revendiqué dans l'une quelconque des revendications 1 à 3, **caractérisé en ce que** le matériau filtrant (111) comporte un premier composant filtrant et un deuxième composant filtrant qui est identique ou différent du premier composant filtrant, et le précurseur est préparé en mélangeant un premier mélange qui contient le premier composant filtrant, les particules nanométriques de silicium (112) et une partie du liant (12) avec un deuxième mélange qui contient le deuxième composant filtrant et le reste du liant (12).

5. Procédé tel que revendiqué dans l'une quelconque des revendications 1 à 3, **caractérisé en ce que** le matériau filtrant (111) comporte un premier composant filtrant et un deuxième composant filtrant qui est identique ou différent du premier composant filtrant, le précurseur est préparé en mélangeant un mélange qui contient le premier composant filtrant (111) et les particules nanométriques de silicium (112) avec le liant (12) et le deuxième composant filtrant.

6. Filtre **caractérisé par** une composition active (11) et un liant (12), ladite composition active (11) comportant des particules nanométriques de silicium (112) et un matériau filtrant (111) qui est lié auxdites particules nanométriques de silicium (112) par ledit liant (12).

7. Filtre tel que revendiqué dans la revendication 6, **caractérisé en ce que** ledit liant (12) a une pluralité de pores.

8. Filtre tel que revendiqué dans la revendication 6 ou 7, **caractérisé en ce que** ladite composition active (11) comporte une pluralité de particules actives (113), chacune des particules actives (113) ayant un noyau (114) du matériau filtrant (111) et les particules nanométriques de silicium (112) étant adsorbées sur le noyau (114) du matériau filtrant (111).

9. Filtre tel que revendiqué dans l'une quelconque des revendications 6 à 8, **caractérisé en outre par** une couche active pressée à chaud (1) et au moins une couche filtrante pressée à chaud (2) disposée sur ladite couche active pressée (1), ladite couche active pressée à chaud (1) comportant lesdites particules nanométriques de silicium (112), une partie dudit matériau filtrant (111) et une partie dudit liant (12), et ladite couche filtrante pressée à chaud (2) comportant le reste dudit matériau filtrant (111) et le reste dudit liant (12).

10. Filtre tel que revendiqué dans la revendication 9, **caractérisé en outre en ce que** deux desdites couches filtrantes pressées à chaud (2) étant respectivement disposées sur deux surfaces opposées de ladite couche active pressée à chaud (1).

11. Filtre tel que revendiqué dans l'une quelconque des revendications 6 à 8, **caractérisé en outre par** au moins deux couches actives pressées à chaud (1) et au moins une couche de liaison pressée à chaud interposée entre lesdites au moins deux couches actives pressées à chaud (1), lesdites au moins deux couches actives pressées à chaud (1) comportant lesdites particules nanométriques de silicium (112) et une partie dudit liant (12), et ladite couche de liaison pressée à chaud comportant le reste dudit liant (12).

12. Filtre tel que revendiqué dans l'une quelconque des revendications 6 à 11, **caractérisé en ce que** lesdites particules nanométriques de silicium (112) sont présentes en une quantité allant de 15% en poids à 40% en poids sur la base de 100% en poids desdites particules actives (113).

13. Filtre tel que revendiqué dans l'une quelconque des revendications 6 à 11, **caractérisé en ce que** lesdites particules nanométriques de silicium (112) sont présentes en une quantité comprise entre 40% en poids et 80% en poids sur la base de 100% en poids desdites particules actives (113).

14. Filtre tel que revendiqué dans l'une quelconque des revendications 6 à 13, **caractérisé en ce que** ledit matériau filtrant (111) comporte un premier composant filtrant et un deuxième composant filtrant qui est identique ou différent du premier composant filtrant, ledit deuxième composant filtrant étant lié audit premier composant filtrant et auxdites particules nanométriques de silicium (112) par ledit liant (12).

15. Filtre tel que revendiqué dans l'une quelconque des revendications 6 à 13, **caractérisé en ce que** ledit matériau filtrant (111) comporte un premier composant filtrant et un deuxième composant filtrant qui est identique ou différent dudit premier composant filtrant, lesdites particules nanométriques de silicium (112) étant adsorbées sur lesdits premier et deuxième composants filtrants de sorte que la quantité desdites particules nanométriques de silicium (112) adsorbées sur ledit deuxième composant filtrant soit inférieure à la quantité desdites particules nanométriques de silicium (112) adsorbées sur ledit premier composant filtrant.
